**Europäisches Patentamt**

**European Patent Office**

**Office européen des brevets**

(11) Veröffentlichungsnummer: **0 168 637**
A2

(12) **EUROPÄISCHE PATENTANMELDUNG**

(21) Anmeldenummer: 85107285.0

(22) Anmeldetag: 13.06.85

(51) Int. Cl.⁴: **F 24 H 1/43,** F 24 H 9/00, F 28 F 1/12

(30) Priorität: 14.06.84 DE 3422088
14.02.85 DE 3505095
24.04.85 DE 3514795

(43) Veröffentlichungstag der Anmeldung: 22.01.86
Patentblatt 86/4

(84) Benannte Vertragsstaaten: AT BE CH DE FR GB IT LI NL SE

(71) Anmelder: Etablissement Agura, FL-9490 Vaduz (LI)

(72) Erfinder: Kehrel, Herbert, Schwefelstrasse 25, FL-9490 Vaduz (LI)

(74) Vertreter: Patentanwälte Schulze Horn und Hoffmeister, Goldstrasse 36, D-4400 Münster (DE)

(54) Gasheizofen, insbesondere Kondensationsheizkessel, mit einem spiralig geformten Rauchzug, Verfahren zu dessen Herstellung und nach dem Verfahren hergestellter Gasheizofen.

(57) Gasheizkessel, insbesondere Kondensationsheizkessel, mit einem Brennraum mit wenigstens einem daran anschließenden Rauchzug und einem diesen als Heizregister umgebenden Mantel eines Wärmeabführmediums, die durch eine Wärmeaustauschwand voneinander getrennt sind, wobei die Wärmeaustauschwand in Form einer Spirale angeordnet ist und in direkter Verbindung zum Rauchgasabzug als Energiespender und/oder Energieträger angeordnet ist, bei dem die zwei das Wärmeabführmedium zwischen sich führenden Wände (1, 1') ein einstückiges, im wesentlichen spiralförmig verlaufendes Profil (2) bilden, das innen eine Anzahl von mit den Außenwänden (1, 1') einstückigen längsverlaufenden Kanälen (3, 3') und außen gleichgerichtete längsverlaufende Rippen (4, 4') aufweist.

Gasheizofen , insbesondere Kondensationsheizkessel ,
mit einem spiralig geformten Rauchzug , Verfahren zu
dessen Herstellung und nach dem Verfahren hergestellter
Gasheizofen

Die Erfindung betrifft einen Gasheizofen , insbesondere
Kondensationsheizkessel mit einem Brennraum mit wenigstens einem daran anschließenden Rauchzug und einem diesen als Heizregister umgebenden Mantel eines Wärmeabführmediums , die durch eine Wärmeaustauschwand voneinander getrennt sind , wobei die Wärmeaustauschwand in
Form einer Spirale angeordnet ist und in direkter Verbindung zum Rauchgasabzug als Energiespender und/oder
Energieträger angeordnet ist , sowie ein Verfahren zur
Herstellung dieses Ofens und schließlich einen nach dem
Verfahren hergestellten Ofen .

Gasheizöfen , insbesondere Kondensationsheizkessel ,
die auch als Brennwertkessel bezeichnet werden , weisen
den Vorzug eines außerordentlich hohen Wirkungsgrades
auf . Das Abgas verläßt den Kessel mit einer unter dem
Kondensationspunkt liegenden Temperatur und die Wärme des durch den Brenner erzeugten Rauchgases wird optimal genutzt .

Ein Gasheizofen bzw. Heizregister , wobei eine Wärmeaustauschwand in Form einer Spirale und in direkter Verbindung zum Rauchgasabzug angeordnet ist , sowie ein Verfahren zur Herstellung dieses bekannten Ofens ist aus der DE-OS 30 14 506 bekannt .
Bei diesem soll ein Wärmetauscher mit einer einen Hohlraum bildenden spiralenförmig aufgewickelten Wand so ausgebildet werden , daß die Leistung erhöht und die Herstellung mit einfachen Mitteln zu einem niedrigen Preis möglich ist .
Der Ofen besteht erfindungsgemäß aus einer zunächst ebenen Wand , die zu einer Spirale aufgewickelt und mit Deckeln verschlossen ist , die an den beiden Enden senkrecht zu der Wand befestigt sind , wobei ein spiralenförmiger Raum für den Umlauf eines der Medien zwischen den Windungen der Wand gebildet wird und Einrichtungen für den Umlauf des anderen Mediums vorgesehen sind .
An der Innen- und/oder Außenseite der hohlen Wand sind Schikanen vorgesehen , die eine Verwirbelung in den Strömungswegen erzeugen , ferner sind die Wandungen der hohlen Wand miteinander durch eine Vielzahl von beispielsweise als Noppen ausgebildeten Verbindungsstellen miteinander verbunden , die in dem Hohlraum zwischen zwei benachbarten Wandungen Schikanen , sowie zwischen den Windungen der hohlen Wand Erhebungen und Vertiefungen bilden , und weiter sind die Verbindungsstellen mittels Schweißung hergestellt .

Die Herstellung des bekannten Wärmeaustauschers erfolgt in der Weise , daß man zwei oder mehr Bleche aufeinander legt , durch eine Anzahl von Schweißstellen miteinander verbindet , die Ränder schweißt , zwischen den Blechen einen Druck anlegt , den zwischen den Blechen gebildeten Raum mit einem entfernbaren Stoff anfüllt , die Bleche zu der gewünschten Spirale biegt und dann den in dem Hohlraum befindlichen Stoff entfernt.

Als Grundmaterial soll gemäß Seite 13 Zeilen 14 und 15 eine Aluminiumlegierung oder eine rostfreie Stahllegierung verwendet und miteinander verschweißt werden .

Ersichtlicherweise wird mit einer derartig aufwendigen Herstellungsart das in der Aufgabenstellung enthaltene Ziel einer sehr preisgünstigen Fertigung keinesfalls erreicht .

Weiter sind bei einem Kondensatheizkessel die vielen zu dessen Herstellung erforderlichen Schweißstellen potentielle Angriffspunkte für Korrosionsschäden durch das Kondensat , welches schweflige Säure in statu nascendi enthält. Diese ist außerordentlich aggressiv und greift normalerweise rostfreies Material bevorzugt an den durch Schweißung gefügemäßig destabilisierten Stellen an .

Ein weiterer fertigungstechnischer Nachteil ergibt sich beim bekannten Gasheizofen bzw. Heizregister dadurch , daß zur Herstellung der Spirale genoppte Bleche verwendet werden , die miteinander verschweißt sein müssen . Die Herstellung eines solchen Ofens mit hunderten von Schweißstellen ist daher relativ aufwendig und insbesondere die Stückzahl , die mit einer Anlage selbst bei vollautomatischer Fertigung hergestellt werden kann,ist im Verhältnis zum Maschinenaufwand relativ sehr begrenzt.

Der Erfindung liegt demgegenüber die Aufgabe zugrunde , einen Gasheizofen , insbesondere Kondensationskessel,sowie ein Verfahren zu seiner Herstellung und einen nach dem Verfahren hergestellten Heizkessel zu schaffen , denen die vorgenannten Nachteile nicht anhaften und wobei der Gasheizofen besonders einfach aufgebaut sein soll und Schweißnähte , wenn überhaupt , nur in relativ geringem Maße erforderlich sein sollen .

Der erfindungsgemäße Gasheizofen soll weiterhin besonders korrosionsfest und kompakt sein , eine optimale Wärmeausnutzung gewährleisten und das Verfahren zu seiner Herstellung soll nicht nur einfach und wirtschaftlich , sondern auch für die Durchführung einer weitgehend mechanisierten , insbesondere vollautomatisierten Fertigung in großen Stückzahlen in besonderer Weise geeignet sein .

Die Lösung der Aufgabe gelingt mit der Erfindung dadurch, daß die zwei das Wärmeabführmedium zwischen sich führenden Wände ein einstückiges , im wesentlichen spiralförmig verlaufendes Profil bilden , das innen eine Anzahl von mit den Außenwänden einstückigen längsverlaufenden Kanälen und außen längsverlaufende , vom Rauchgas umspühlte Rippen aufweist .

Vorteilhaft besteht das Profil aus stranggepreßtem Aluminium und sehr vorteilhaft ist das Profil ein Strangpreßprofil aus reinst-Aluminium .

Die in dem Profil einstückig eingeformten Kanäle können kreisförmigen oder elliptoidischen Querschnitt aufweisen .

Die Kanäle können aber auch eine eckige , vorzugsweise hexagonale Querschnittsform aufweisen .

Die Rippen können als flache Stege ausgebildet sein , deren Querschnittsform rechteckig mit abgerundeten Kanten oder dreiecksförmig bzw. trapezförmig verjüngt ausgebildet ist .

Zur Vereinfachung des Biegens zur Spirale können die Rippen des Profils von der Spirale aus gesehen innen oder außen quer verlaufende Schlitze bzw. Kerben aufweisen .

Weiterhin sind die Profilaußenwände durch mit diesen einstückige Querwände verbunden .

Mit Vorteil sind die Kanäle den gesamten Innenraum des Profils erfüllend und jeweils zu zweit nebeneinander eine gemeinsame Trennwand bildend angeordnet und ausgebildet .

Weiterhin können mit Vorteil die Rippen als sickenförmige , durch längsverlaufende Wandverformungen aus- und/oder einspringende Erhöhungen und/oder Vertiefungen in den Wänden des stranggepreßten Aluprofils ausgebildet sein .

Insbesondere bei dieser Ausbildung kann mit Vorteil vorgesehen sein , daß die Wanddicke einer Wand im Bereich einer Wandverformung im wesentlichen unverändert und etwa gleich der Wanddicke einer zwei Kanäle trennenden Wand ist .

Eine als Rippe ausgebildete Wandverformung kann eckig wie dreieckig oder trapezförmig oder kurvig wie sinus- oder wellenförmig ausgebildet sein .

Eine andere , ebenfalls sehr vorteilhafte Formgestaltung des Heizregisters kann so ausgebildet sein , daß dieses von einer Anordnung jeweils gerader Strangpreßprofilabschnitte , sogenannter Lamellen , gebildet wird, deren Anordnung um die Brennkammer herum die Grundform eines Vielecks aufweist , dessen Eckpunkte im wesentlichen auf Kurvenästen einer spiralförmigen Linie liegend angeordnet sind .
Mit Vorteil weist hierbei die Anordnung der Lamellen die Grundform eines Sechsecks auf , dessen in radialen Abständen vom Pol der spiralförmigen Linie gelegenen Eckpunkte im wesentlichen auf gleiche Polarwinkel einschließenden radialen Linien gelegen sind .

Ein weiteres vorteilhaftes und insbesondere erfindungswesentliches Merkmal des Gasheizofens ergibt sich dadurch , daß zumindest die Rückwand mit einer vom Wärmeabführmedium durchströmbaren Anordnung von Lamellen ausgebildet ist , und daß die das Heizregister und die Brennkammer bildenden Lamellen und die in der Rückwand angeordneten Lamellen einen gemeinsamen Strang bildend in Reihe geschaltet sind .

Weiterhin können sehr vorteilhaft das in Form einer Spirale bzw. das in Form eines spiralförmigen Vielecks ausgebildete Heizregister mit vertikaler Achse angeordnet und ausgebildet sein und hierbei kann erfindungswesentlich die Brennkammer im oberen Bereich bzw. der Brenner im oberen Bereich der Brennkammer angeordnet sein .

Insbesondere hierdurch ergibt sich eine sehr günstige und unkomplizierte Möglichkeit der Abführung des Kondensats . Ein Verfahren zur Herstellung des Gasheizofens nach der Erfindung sieht vor , daß das aus den Wänden , den Kanälen sowie den Rippen gebildete Profil stranggepreßt und vorzugsweise unmittelbar danach zur Spiralform gerundet wird .

Bei der unmittelbaren Rundung folgend der Extrudierung aus der Strangpreßmaschine ist das Strangpreßprofil nur kurzfristig erstarrt und infolge erheblicher Wärme noch außerordentlich flexibel , nahezu teilplastisch , so daß dessen Formgebung durch Biegen beispielsweise mittels Biegewalzen ohne Schwierigkeiten erfolgt , weil das Material die hierbei auftretenden Stauchungen und Streckungen überraschend gut verträgt , ohne Risse oder Deformationen wie Einbuchtungen zu erleiden .

9

Dabei ist beispielsweise vorgesehen , daß das Runden im Durchlauf durch Walzen erfolgt , die einen Biegeradius festlegen , der während der Biegung zur Spiralform kontinuierlich vergrößert wird .

Dabei können zugleich die in den Rippen vorhandenen Schlitze bzw. Kerben durch Einschnitte bzw. Einprägung mittels Prägewalzen ebenfalls unmittelbar nach dem Strangpressen und vor bzw. beim Runden hergestellt werden .

Ein anderes Verfahren zur Herstellung des die Grundform eines spiralförmigen Vierecks aufweisenden Heizregisters entsprechend den Ansprüchen 13 bis 16 ist dadurch gekennzeichnet , daß diese in folgenden Arbeitsschritten vorgenommen wird , daß nämlich

a) als Ausgangsmaterial ein Profil aus stranggepreßtem Aluminium in einer Länge vorgerichtet wird , die der gestreckten Länge des Vielecks entspricht ;

b) an den Außenseiten dieses Profils die Abstände der Eck- bzw. knickpunkte bzw. deren Position auf dem Ausgangsmaterial durch Anzeichnen etc. markiert werden ;

c) das Profilstück , welches im wesentlichen eine flache , doppelwandige einstückige Lamelle bildet , und an den Außenflächen vorzugsweise mit Rippen ausgebildet ist , an jeder Markierungsstelle , beginnend am brennkammerseitigen Ende , mit einem Einschnitt in einer zur Längsachse senkrechten Ebene bis auf die innere Wandung durchtrennt wird ;

d) an der Knickstelle - dem Trennschnitt entgegengesetztaus den Rippen der undurchtrennten Wandung V-förmige Gehrungsdreiecke herausgeschnitten werden ;

e) das Profil über die unversehrte Wandung in den Knick mit einem brennkammerseitigen stumpfen Winkel gebogen wird , wobei die durchtrennte Wandung zu einem V-förmigen Spalt aufklafft ;

f) in den V-förmigen Spalt ein kompatibel geformtes , ebenfalls V-förmiges Paßstück eingefügt und mediendicht verschweißt wird ;

g) weiterfolgend alle übrigen Knickstellen gemäß f) fertiggestellt und das Heizregister einer Druck - und Dichtigkeitsprüfung unterzogen wird .

Das Verfahren ist weiterhin dadurch gekennzeichnet , daß die innere Wandung mit der entsprechenden Wandung des danebenliegenden Profilstückes nicht einstückig ist, sondern durch eine von außen anbringbare Schweißnaht mit diesem verbunden sein kann .

Weiter kann auch die brennkammerseitige Wand der Pro - filstücke mit der danebenliegenden Wand durch eine Schweißnaht verbunden und darauf die V-förmigen Gehrungsdreiecke eingeschweißt werden .

Ein nach dem Verfahren gemäß den Ansprüchen 20 bis 22 hergestelltes Heizregister des Gasofens zeichnet sich dadurch aus , daß es die Raumform gemäß den Ansprüchen 13 bis 15 aufweist , mit einanderfolgenden Knickstellen an den auf einer spiralförmigen Linie gelegenen Eckpunkten , und daß jede dieser Knickstellen im Strangpreßprofil einer Lamelle mit einem Trennschnitt durch die der Brennkammer abgewandte Wandung der Lamelle , mit einem Biegeknick der brennkammerzugewandten Wandung der Lamelle zu einem stumpfen Winkel $\gamma$ und mit einem in den Knickspalt der durchtrennten Wandung , vorzugsweise durch Schweißung eingefügten V-Profilstück ausgebildet ist .

Eine andere Möglichkeit für die Herstellung des aus einzelnen geraden Lamellen mit der Grundform eines Vielecks mit auf Kurvenästen einer spiralförmigen Linie liegenden Eckpunkten ausgebildeten Heizregisters ist dadurch gekennzeichnet , daß dieses aus einem unzertrennt einstückigen Strang des stranggepreßten Profils durch Biegen in den Knickstellen hergestellt ist .

Mit Vorteil entfällt hierdurch jegliche Schweißarbeit . Vorteilhaft für die Durchführung dieses Herstellungsverfahrens ist die sich aus der erfindungswesentlichen Konfiguration des Heizregisters ergebende Tatsache , daß die stumpfen Winkel $\gamma$ aller Knickstellen untereinander gleich sind . Diese Tatsache erleichtert die Herstellung des Heizregisters durch Biegen der Knickstellen sehr wesentlich , und ermöglicht beispielsweise eine vollmechanisierte automatische Fertigung in einer relativ unkomplizierten Biegevorrichtung in großen Stückzahlen, wodurch die Herstellungskosten signifikant verringert werden .

Ein nach letztgenanntem Verfahren ausschließlich durch Biegen in den Knickstellen hergestelltes Heizregister in vieleckig-spiralförmiger Ausgestaltung ist einerseits durch diese Raumform sowie auch dadurch gekennzeichnet , daß es aus einem einstückigen Profilstrang hergestellt ist und durch einen Biegevorgang hergestellte Knickstellen an den Eckpunkten aufweist , ohne daß diese mit Schweißnähten ausgebildet sind .

13

Die Erfindung wird in Zeichnungen in mehreren bevorzugten Ausführungsformen gezeigt , wobei aus den Zeichnungen weitere vorteilhafte Einzelheiten der Erfindung entnehmbar sind .

Es zeigen :

Figur 1    perspektivisch einen Gasheizofen gemäß Erfindung , wobei das zur Spirale geformte Profil teilweise geschnitten dargestellt wird , und wobei die Brennkammer mit einer horizontalen Achse angeordnet ist ;

Figur 2    einen Gasheizofen mit einem im wesentlichen gleichgearteten Heizregister , jedoch mit vertikal angeordneter Brennkammerachse und im oberen Bereich der Brennkammer angeordnetem Brenner mit abwärts gerichteter Flamme , in schematischer Darstellung ;

Figur 3    schematisch das Runden des Profils zum spiralig gewickelten Kesselblock ;

Figur 4    eine rein schematische Darstellung eines
Heizregisters in der Grundform eines Vielecks,
dessen Eckpunkte im wesentlichen auf Kurvenästen einer spiralförmigen Linie liegend angeordnet sind ;

Figur 5    eine ebenfalls rein schematische Darstellung
des Heizregisters gemäß Fig.4 in Zusammenschaltung mit einer Anordnung von Heizlamellen einer Rückwand des Heizofens ;

Figur 6    einen Heizofen mit Heizregister gemäß Fig.4
und 5 , dessen Rauchgaswandungen eine Brennkammer umschließen , im Schnitt entlang einer zur Mittelachse des Heizregisters senkrechten Ebene ;

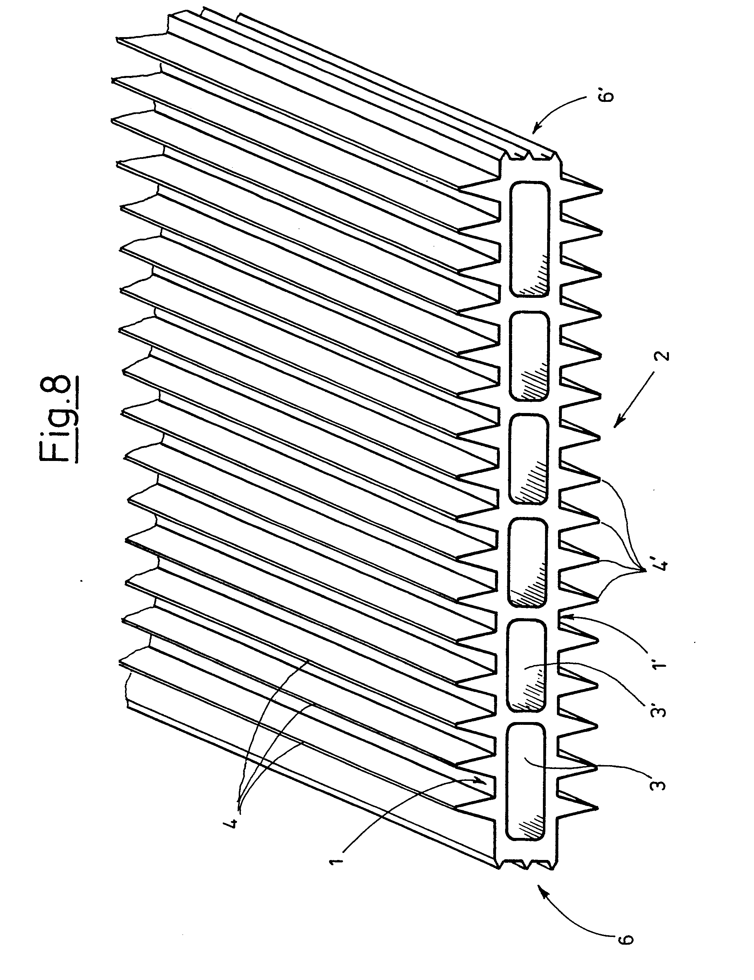

Figur 7    die Ausführung einer Knickstelle des Heizregisters gemäß Fig.6 , ebenfalls im Schnitt ;

Figur 8 und 9a,9b    je einen Schnitt durch ein erfindungsgemäß verwendetes Strangpreßprofil ;

15

Fig.10a bis 10d    jeweils einen Schnitt durch unterschiedlich ausgestaltete Strangpreßprofile mit sickenförmigen , durch
längslaufende Wandverformungen aus-
und/oder einspringende Erhöhungen
und/oder Vertiefungen in den Wänden
rippenartig gestalteten Wandoberflächen , im Schnitt ;

Figur 11    eine Seitenansicht eines Strangpreßprofiles während eines Biegevorganges
zwischen Walzen , wobei die Walzen
zur Herstellung quer verlaufender
sickenförmiger Kerben mit in achsparalleler Richtung verlaufenden , radialen Verformungsstegen versehen sind .

Der erfindungsgemäße Gasheizofen besteht aus einem spiralig gewickelten Kesselblock 23 mit einer zentralen
Brennkammer 7 , in die ein Brenner 20 eingesetzt ist ,
sowie den üblichen Zu- und Ableitungen für Gas , Luft ,
Rauch- und Heizungswasser sowie den üblichen Verklei -
dungen und Armaturen . Als Verkleidung kann eine in
Blockform umgebende Isolierschicht 24 aus wärmeverträglichem Kunststoffschaum verwendet werden .

16

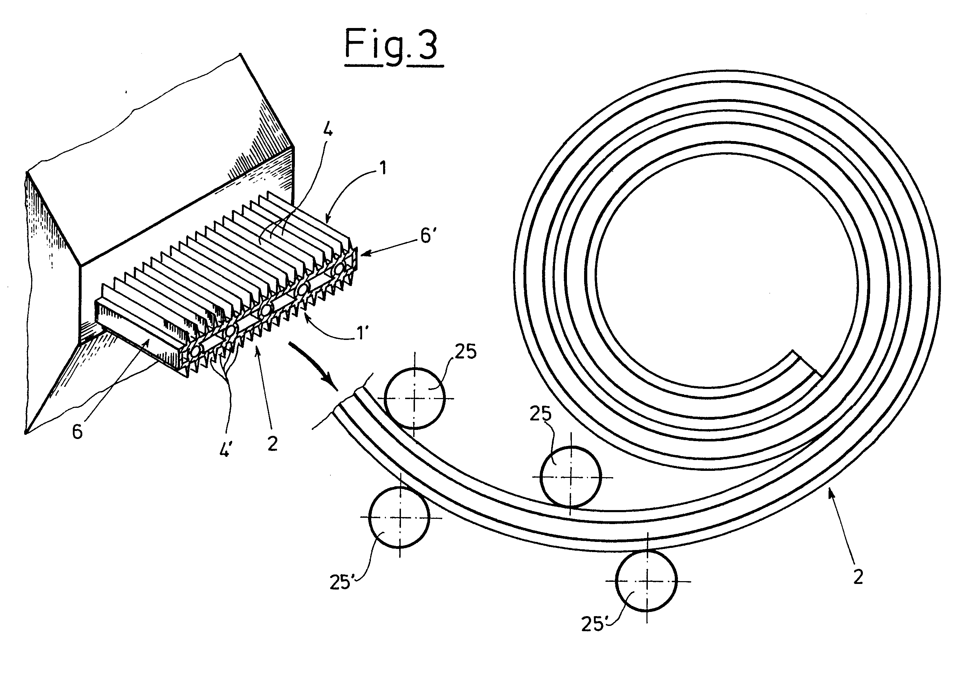

Die Erfindung basiert erfindungswesentlich auf der Herstellung des Kesselblocks 23 , welcher aus einem spiralig gewickelten Profil 2 mit im wesentlichen flachrechteckigem Querschnitt besteht , welches zwei Außenwände 1,1' und zwei diese verbindende Querwände 6,6' aufweist , die gemeinsam stranggepreßt oder extrudiert worden und daher einstückig sind (Fig.3).

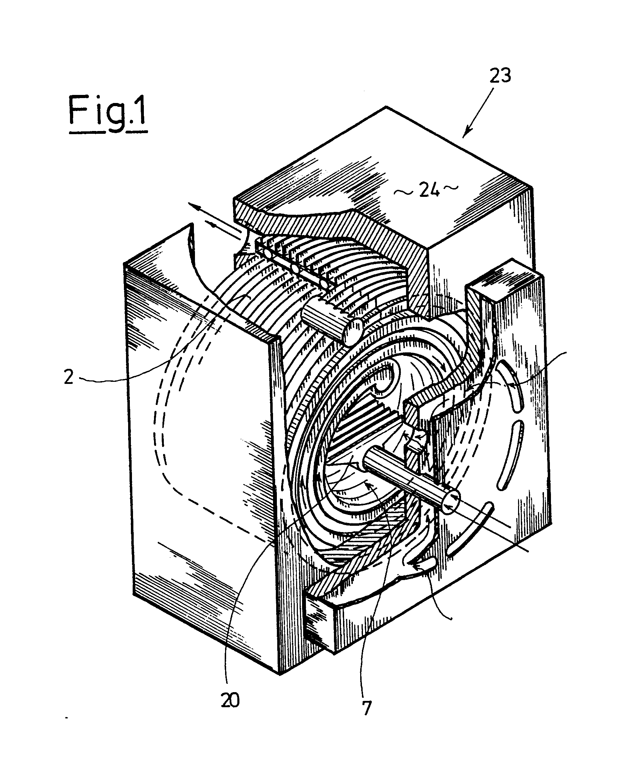

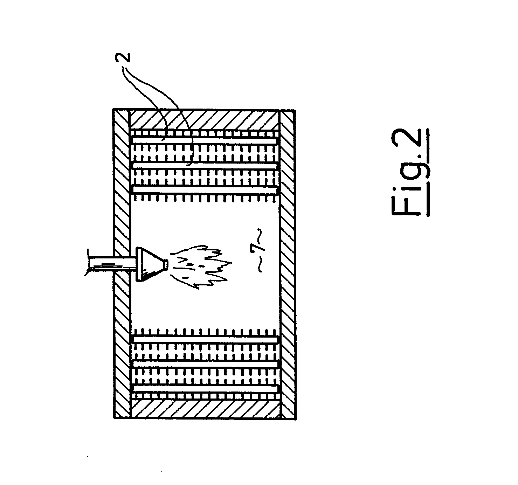

Bei dem in Fig.1 gezeigten Ausführungsbeispiel ist die Brennkammer 7 mit horizontaler Mittelachse angeordnet . Es kann aber auch sehr zweckmäßig sein , wie dies im Prinzip an sich bekannt ist , die Brennkammer 7 gemäß schematischer Darstellung in Fig.2 mit vertikaler Mittelachse anzuordnen . Dies ergibt den Vorteil , daß die Abführung des bei der Abkühlung der Rauchgase an der Wärmeaustauschwand sich niederschlagenden Kondensates sehr unproblematisch möglich ist .

Das durch den Brenner 20 erzeugte heiße Rauchgas durchströmt die Zwischenräume zwischen den Profilen 2, während innerhalb der Profile 2 das Wärmeträgermedium , üblicherweise Heizungswasser , erwärmt wird . Rauchgase und Heizungswasser werden dabei im Gegenstrom beidseitig der Wärmeaustauschwand geführt .

Die Profile 2 weisen , wie aus einer Zusammenschau der Figuren 3 sowie 8 ,9a , und 9b hervorgeht , einstückig mit den Außenwänden 1,1' und den Querwänden 6,6' Kanäle 3,3' auf , in welchen z.B. Brauchwasser , aber auch andere Übertragungsmedien erwärmt werden können . Die Kanäle 3,3' dienen nicht nur der Führung eines oder zweier zu erwärmenden Medien , sondern stützen auch die Außenwände 1,1' ab , sodaß im Profil 2 erhebliche Drücke gefahrlos auftreten dürfen .

Sehr überraschend wird aber auch durch das mit den inneren Kanalwänden strukturierte Strangpreßprofil 2 infolge der Kanalausbildung derart stabilisiert , daß ein Runden ohne Füllung mit einem abstützenden Stoff möglich ist . Hierdurch wird die Fertigung gegenüber bekannten spiralförmigen Heizungsregistern wesentlich unkomplizierter und preisgünstiger .

An den Außenwänden 1,1' sind zur Erhöhung der Kontaktfläche mit dem Rauchgas Rippen 4,4' angeordnet . Diese können als flache Stege ausgebildet sein , deren Querschnittsform rechteckig mit abgerundeten Kanten oder dreiecksförmig bzw. trapezförmig verjüngt ausgebildet ist .

Es ist für den Fachmann überraschend , daß das erfindungsgemäße Strangpreßprofil 2 im noch warmen Zustand nach Austreten aus der Strangpresse oder nach erneutem Erwärmen , gegebenenfalls aber auch kalt , ohne schädliche Deformation problemlos gerundet werden kann , wodurch nach Anbringung von Vorder- und Rückwand sowie der notwendigen Rohrleitungen und Armaturen mit einer höchst unkomplizierten und leistungsfähigen Herstellungsart ein wärmewirtschaftlich optimaler Kesselblock des Kondensationsheizkessels herstellbar ist .

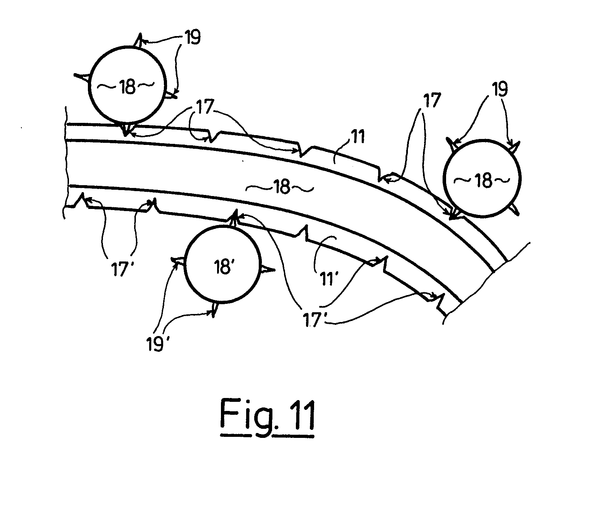

Um das Runden des Profils 2 zu erleichtern , können die Rippen 4,4' quer verlaufende Schlitze bzw. Kerben 17,17' aufweisen , wie dies aus Fig.11 ersichtlich ist . Solche Schlitze bzw. Kerben 17,17' können entweder durch Prägewalzen 18,18' oder auch durch spanabhebende Anbringung von Einschnitten hergestellt sein . Vorzugsweise sind sie in regelmäßigen Abständen angeordnet . Die Einschnitte können beispielsweise durch fliegende Sägen eingeschnitten werden , sofern sie nicht unmittelbar in Verbindung mit dem Stragpreßvorgang direkt angebracht werden .

Das Runden des Profils erfolgt mittels Durchlauf durch Walzen 25,25' , die einen Biegeradius festlegen , der während des Rundens einer Spirale kontinuierlich vergrößert wird , in dem die Walzen in ihrer gegenseitigen Stellung verändert werden . Das Ablängen des Profils 2 kann in diesem Zusammenhang sowohl vor als auch nach dem Runden erfolgen . Zu- und Ableitungen können mit der Spirale sowohl preß-verklebt als auch-verschweißt werden .

Der Profilinnenraum bzw. die Kanäle 3,3' können nicht nur zur Wassererhitzung , sondern auch z.B. zur Erhitzung eines Kältemediums wie Frigen dienen , wenn nicht in einer weiteren Ausgestaltung des erfindungsgemäßen Profils 2 die Erhitzung von Luft im Innenraum und beispielsweise gleichzeitig eine Erhitzung von Brauchwasser , oder umgekehrt , in den Kanälen 3,3' vorgenommen wird .

Weiter geht aus den Darstellungen des Profils 2 hervor , daß jeweils zwei nebeneinander liegende Kanäle 3 bzw. 3' eine gemeinsame Trennwand 10 aufweisen , und demgemäß innere Zwischenräume 26 entfallen , welche der Durchleitung eines gegenüber den Kanälen unterschiedlichen Mediums vorbehalten sein können .

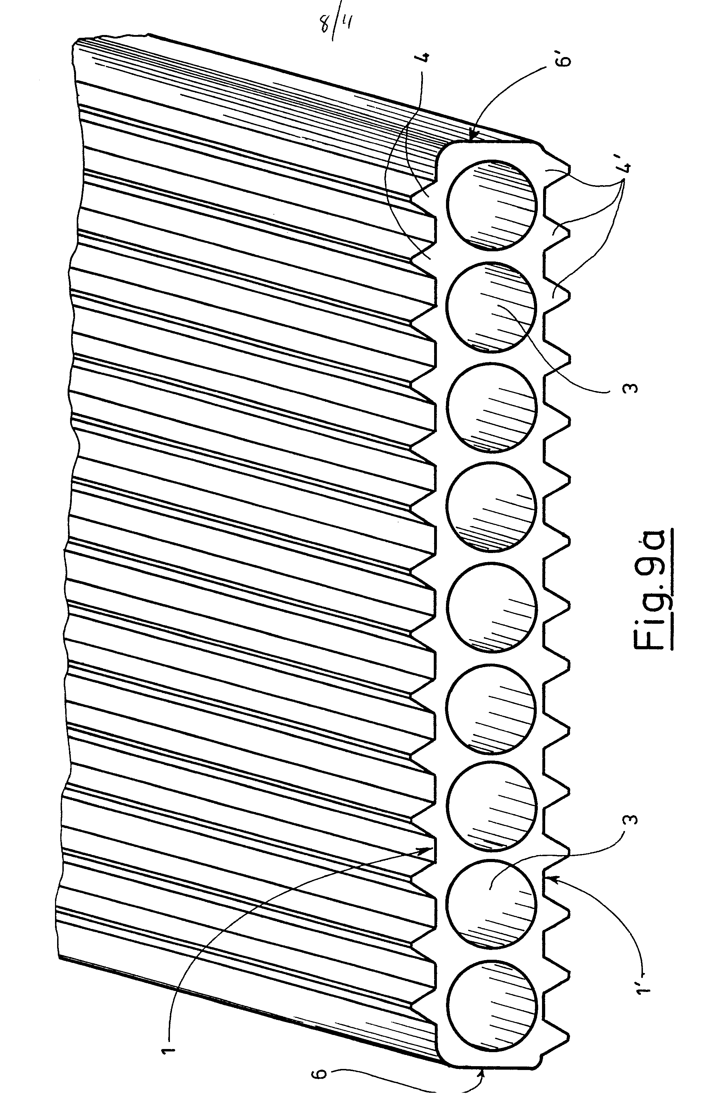

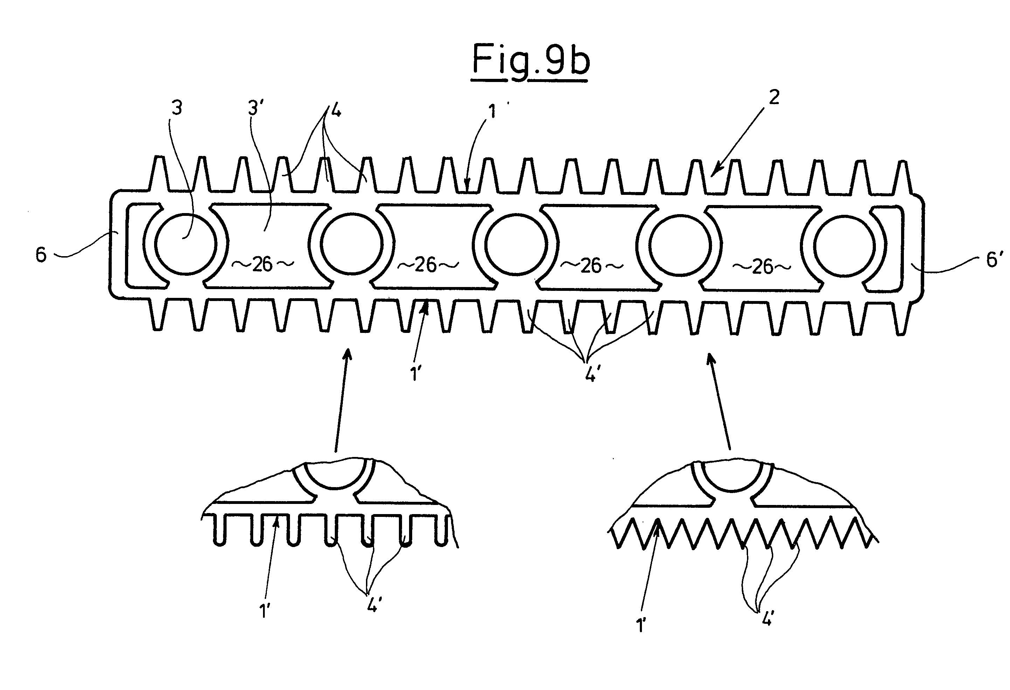

Die Kanäle 3,3' bilden dann den gesamten Innenraum des Profils aus, entsprechend der Darstellung in Fig.8 und 9a, wobei dann bedarfsweise in unterschiedlichen Gruppen von Kanälen 3 bzw. 3' unterschiedliche Medien erwärmt werden können .

Vorteilhaft sind Kanäle gemäß Fig.8 nicht immer kreisförmig sondern können auch zur vorteilhaften Materialeinsparung bei gleichzeitig optimaler Nutzung der gegenüber den Rauchgasen austauschbaren Wärme elliptoidisch sein .

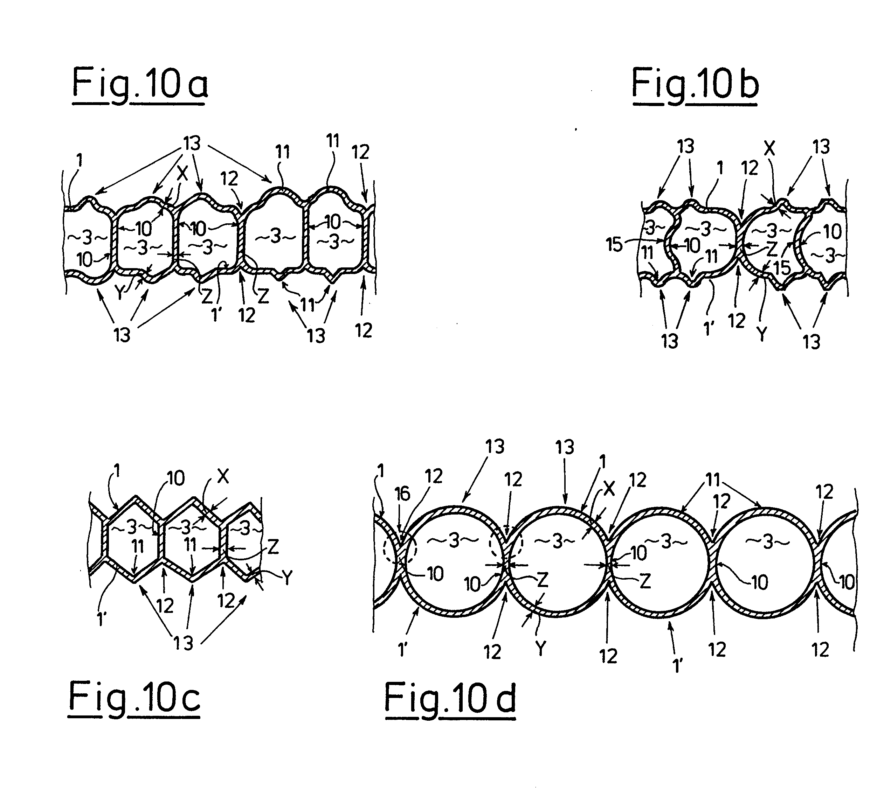

Eine sehr wirtschaftliche , materialsparende und wärmewirtschaftlich günstige Ausbildung des Strangpreßprofils wird gemäß Darstellung in den Figuren 10a bis 10d auch dadurch erreicht , daß die Rippen als sickenförmige , durch längslaufende Wandverformungen aus- oder einspringende Erhöhungen oder Vertiefungen 11 bzw. 12 in den Wänden 1,1' des stranggepreßten Aluprofils 2 ausgebildet sind . Dabei kann die Wanddicke x,y einer Wand 1, 1' im Bereich einer Wandverformung 13 im wesentlichen unverändert und etwa gleich der Wanddicke z einer zwei Kanäle 3,3' trennenden Wand 10 sein .

Mit dieser Ausgestaltung hat sich überraschenderweise herausgestellt , daß das aus den Wänden , den inneren Kanälen und den sickenförmigen Wandverformung gebildete, praktisch in allen Querschnittsbereichen vergleichsweise dünnwandige stranggepreßte Profil sich sowohl im noch warmen Zustand unmittelbar nach dem Strangpressen als auch im kalten Zustand einwandfrei und problemlos zur Spirale runden läßt .

Vorteilhaft wird mit der genannten Ausbildung bis zu 50% des bisher für erforderlich erachteten Gewichtes pro laufende Längeneinheit gespart , und infolge der kurzen inneren Wärmeleitwege ein schnellerer Wärmetransport und infolgedessen eine größere Wärmeübertragungsleistung je qm Wärmeübertragungsfläche erzielt .

Eine Wandverformung mit der Wirkung einer Rippe kann in Dreiecksform oder Trapezform oder Sinusform oder Wellenform ausgebildet sein , und eine Folge von Wandverformungen kann eine fortlaufende Wellenform bilden . Dabei ergibt sich weiter mit Vorteil als Folge dieser erfindungswesentlichen Ausbildung des Strangpreßprofiles , daß eine zwei Kanäle trennende Wand als kurzer Steg zwischen zwei gegenläufig nach innen verlaufenden Vertiefungen 12 der beiden Außenwände 1,1' des Profils ausgebildet ist . Durch diese Ausbildung wird das Biegemoment der zwei Kanäle trennenden Wand 10 verringert und somit die Biegewilligkeit des Strangpreßprofils erheblich begünstigt . In gleicher Richtung wirkt eine Ausführung der zwei Kanäle trennenden Wand 10 mit einer Krümmung entsprechend der Darstellung in Fig.10b .
Überhaupt wird dadurch mit Vorteil eine Materialanhäufung im Bereich des Anschlußes einer zwei Kanäle 3,3'
trennenden Wand an die Außenwand 1,1' dadurch vermieden ,
daß die Außenwand an dieser Stelle jeweils mit einer Vertiefung 12 , die gleichzeitig eine Vergrößerung der Wärmeaustauschfläche ergibt , ausgebildet ist .

Und schließlich kann eine weitere Verbesserung der Biegewilligkeit bei einem Profil dieser Ausgestaltung auch
dadurch erreicht werden , daß als Erhöhungen ausgebildete Verformungen 13 mit sickenförmigen querverlaufenden
Kerben 17 in vorzugsweise gleichen Abständen ausgebildet sind . Sie können auf beiden Seiten der Spirale angebracht sein .

Ein weiterer Vorteil ergibt sich mit der letztgenannten
Ausgestaltung des Strangpreßprofils auch dadurch , daß
dessen Querschnitt insgesamt schmäler und damit der Wärmeaustauschblock insgesamt kompakter und problemloser
herstellbar wird . Dies hat eine erhöhte Rauchgasgeschwindigkeit und damit einen erhöhten spezifischen
Wärmeübergang vom Rauchgas an die Wärmeaustauschwand
zur Folge . Damit erhöht sich die spezifische Wärmeaustauschleistung je Flächeneinheit der Wärmeaustauschwand . Wegen der gegenüber hochstehenden Rippen etwas verringerten Wärmeaustauschfläche je Längeneinheit des Profils kann das Heizregister insgesamt mit einer etwas größeren gestreckten Länge ausgebildet sein , obwohl dennoch der Durchmesser der damit hergestellten Spirale wegen der geringeren Wanddicken kleiner als bei Ausbildung mit Rippen ausfällt . Insgesamt wird hierdurch mit einem Minimum an Materialaufwand , Fertigungsaufwand und Bauraum beim betriebsfertigen Gasheizofen ein Optimum an Wirksamkeit und Wirtschaftlichkeit erreicht .

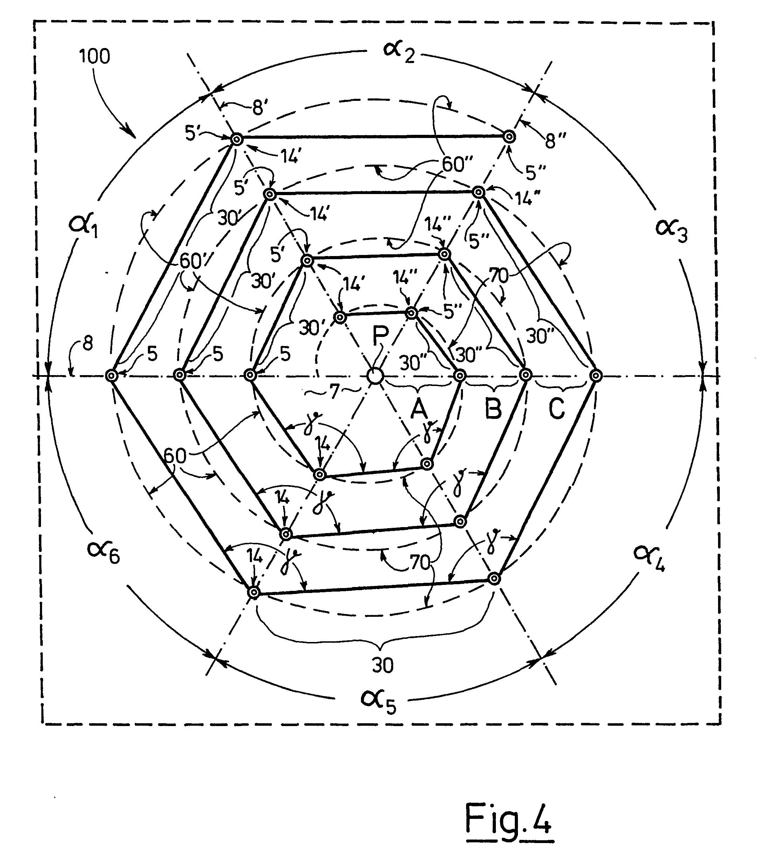

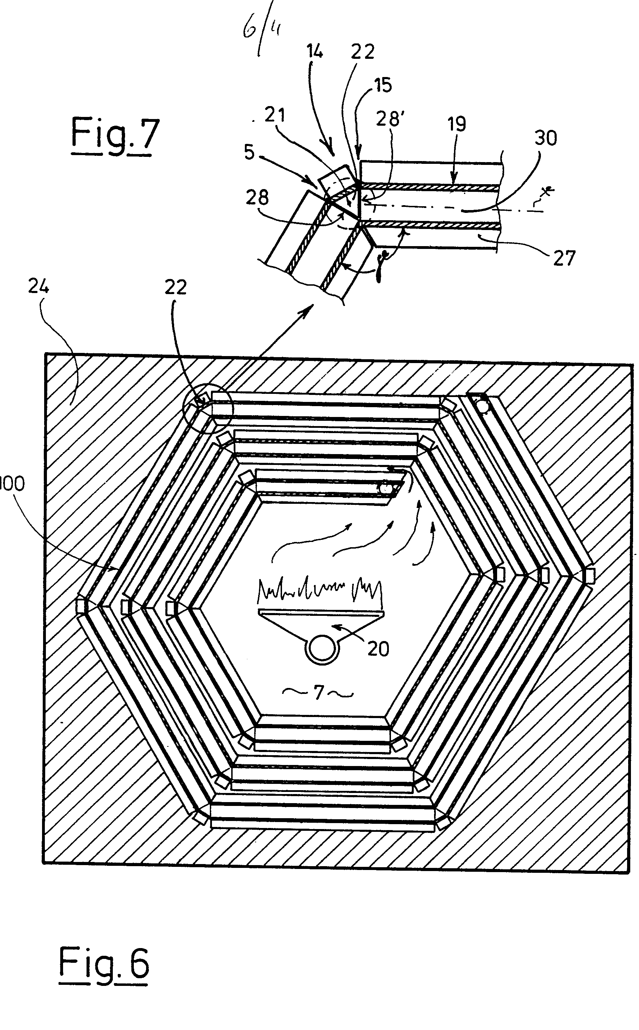

Wie weiterhin aus einer Zusammenschau der Figuren 4 bis 6 erkennbar ist , kann das Heizregister 100 von einer Anordnung jeweils gerader Strangpreßprofilabschnitte , sogenannter Lamellen 30,30',30" gebildet sein , deren Anordnung um die Brennkammer 7 herum die Grundform eines Vielecks aufweist , dessen Eckpunkte 5,5',5" im wesentlichen auf Kurvenästen 60,60',60" einer spiralförmigen Linie 70 liegend angeordnet sind .

Bei dieser Anordnung bzw. der sich hieraus ergebenden Raumform des Heizregisters bleibt der intensive Wärmeübergang des ursprünglich stetig zur Spiralform gewundenen Heizregisters in vollem Umfang erhalten , wobei besonders vorteilhafte Möglichkeiten zu dessen Herstellung in vollautomatisierten und vollmechanisierten Arbeitsabläufen erreicht werden . Dies gilt insbesondere in solchen Fällen , bei denen die Herstellung einer stetig gerundeten Spiralform mit Schwierigkeiten verbunden sein sollte .

Eine sehr vorteilhafte Ausgestaltung ergibt sich dabei durch Anordnung der Lamellen 30 in der Grundform eines Sechsecks , dessen in radialen Abständen A,B,C vom Pol P der spiralförmigen Linie 70 gelegene Eckpunkte 5,5', 5" im wesentlichen auf gleiche Polarwinkel $\alpha_1$ , $\alpha_2$ , $\alpha_3$ , $\alpha_4$ , $\alpha_5$ , $\alpha_6$ , einschließenden radialen Linien 8,8', 8" gelegen sind .

Sehr vorteilhaft wirkt sich hierbei für die Fertigung des Heizregisters aus , daß bei der vorgeschlagenen neuen Raumform zwischen den Eckpunkten 5,5',5" sich erstreckende Bereiche der Lamellen geradlinig ausgebildet sind . Dabei verlaufen die geradlinigen Bereiche der Lamellen 30 an den Eckpunkten 5,5',5" , an denen sie Knickstellen 14,14',14" bilden , im stumpfen Winkel $\gamma$ miteinander . Ein sehr wesentlicher Vorteil für die vorzugsweise vollmechanisierte Herstellung des Heizregisters 100 ergibt sich daraus , daß infolge der vorgesehenen Raumform auf einer gemeinsamen radialen Linie 8,8',8" gelegene Knickstellen 14,14',14" gleichgroße stumpfe Winkel $\gamma$ aufweisen . Diese betragen ca.120$^o$ und erfordern zu ihrer Herstellung jeweils eine Biegung des Profils 2 im Knickpunkt um 60$^o$ aus der Strecklage .

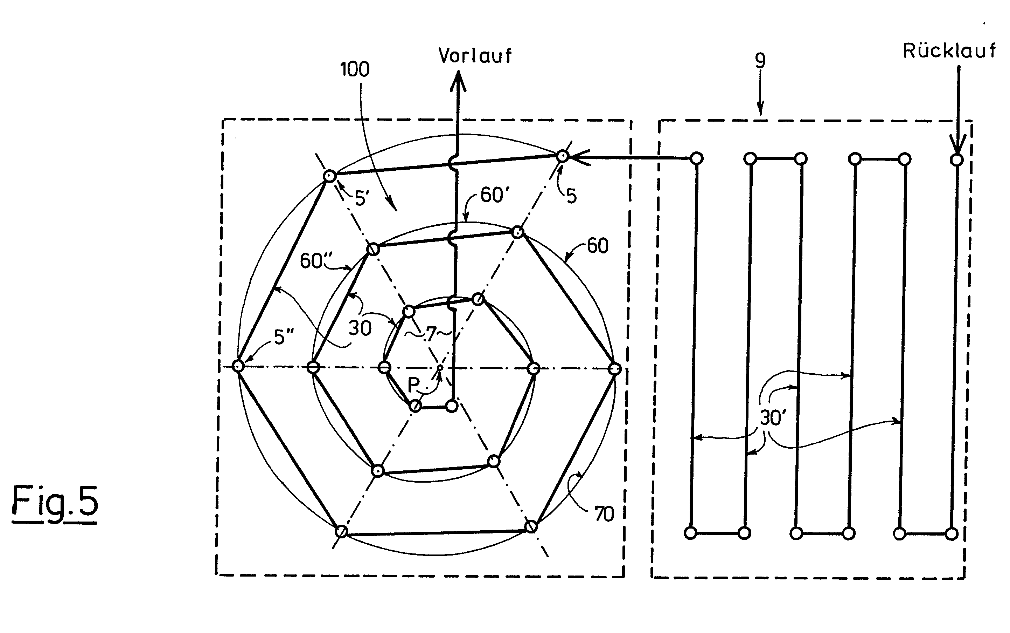

Eine Ausgestaltung des Heizregisters zur intensiven Wärmeübertragung durch eine gegebenenfalls starkstrahlende Flamme , insbesondere in Verbindung mit einem Ölbrenner , sieht vor , daß zumindest die Rückwand des Heizofens mit einer vom Wärmeabführmedium durchströmbaren Anordnung von Lamellen ausgebildet ist (Fig.5). Dabei kann diese Anordnung der Rückwand 9 , wie an sich bekannt , mäanderförmig in der Fläche mit geraden Lamellen 30' von Strangpreßprofilen ausgebildet sein . Dabei ist mit Vorteil vorgesehen , daß die die Brennkammer 7 umschließenden Lamellen 30 des Heizregisters einen ersten Strömungskanal und die als Rückwand 9 angeordneten Lamellen 30' einen zweiten Strömungskanal für das Wärmeübertragungsmedium bilden , und daß der erste und der zweite Strömungskanal einen gemeinsamen Strang bildend in Reihe geschaltet sind .

Auch bei diesem Heizregister 100 kann von der Maßnahme Gebrauch gemacht sein , daß es mit vertikaler Achse I-I angeordnet bzw. ausgebildet und die Brennkammer 7 im oberen Bereich bzw. der Brenner 20 im oberen Teil der Brennkammer 7 angeordnet ist .

Ein sehr vorteilhaftes Verfahren zur Herstellung des Heizregisters der genannten Art erfolgt in den Arbeitsschritten a) bis g) entsprechend dem Merkmal des Anspruchs 20 , wobei vorteilhafte Ausgestaltungen dieses Verfahrens entsprechend den Merkmalen der Ansprüche 21 und 22 vorgesehen sind .

Ein nach diesem Verfahren hergestelltes Heizregister ist daran zu erkennen , daß es die Raumform eines spiralförmigen Vielecks aufweist , miteinander folgenden Knickstellen 14,14',14" an den Eckpunkten 5,5',5" , und daß jede dieser Knickstellen 14,14',14" im Strangpreßprofil einer Lamelle 30,30' mit einem Trennschnitt 15 durch die der Brennkammer abgewandte Wandung 19 der Lamelle 30 zu einem stumpfen Winkel $\gamma$ und mit einem in den Knickspalt 21 der durchtrennten Wandung 19 vorzugsweise durch Schweißung eingefügten V-Profilstück 22 ausgebildet ist . Dieses ist zwischen die aufklaffenden Schnittflächen 28,28' des Trennschnitts 15 nach dem Biegen des stumpfen Winkels eingefügt . Die Fügekanten werden durch Schweißnähte mediendicht in an sich bekannter Weise verschlossen .

Ersichtlicherweise eignet sich dieses Verfahren sehr vorteilhaft zur Durchführung auf einer an sich bekannten vollautomatischen Einrichtung , welche nacheinander das Einschneiden , das Biegen und das Schweißen in sehr wirtschaftlicher Weise durchführt .

In einer weiteren Ausgestaltung der Erfindung können auch die Knickstellen zwischen den benachbarten , im stumpfen Winkel aneinandergesetzten Strangpreßprofilen ebenfalls als Schweißnähte ausgebildet sein , die jeweils von außen aufgebracht werden können . Das Einsetzen der V-Profilstücke 22 mit oder ohne aufgesetzte Rippen erfolgt dann wie vorstehend bereits beschrieben . Vorteilhaft ergibt sich dadurch , daß zwar ein Trennschnitt des äußeren Profils und ein Gehrungsschnitt der brennerseitigen Rippen 27 erfolgt , dafür aber das Biegen unterbleiben kann und stattdessen von außen eine Schweißnaht gelegt wird , die gegebenenfalls mit einer vollautomatischen Einrichtung gegenüber einem Biegevorgang noch wirtschaftlicher herstellbar ist .

Kurzgesagt , werden dabei also die eigentlichen Knickstellen durch von außen aufbringbare Schweißnähte ersetzt . Dabei bildet sich bereits automatisch eine V-Naht aus , so daß gegebenenfalls eine vorbereitende Bearbeitung des Schweißnahtbereiches entfallen kann , und ein einfacher Trennschnitt ausreichend ist ,wie er ohnehin für das Trennen der Profile erforderlich ist . Der eigentliche Gehrungsschnitt der Rippen 27 bleibt davon unberührt .

Nach Maßgabe der Profilhöhe und der Wanddicken des Strangpreßprofiles hat es sich bei einem relativ schlanken Profil , für einen Heizofen einer Leistungsklasse beispielsweise für eine Etagenheizung oder für ein Einfamilienhaus in sehr überraschender Weise herausgestellt , daß es aus einem unzertrennt einstückigen Strang des stranggepreßten Profils lediglich durch Biegen in den Knickstellen herstellbar ist .

Dieses Herstellungsverfahren ist einerseits optimal wegen des völligen Fehlens von Schweißnähten und wegen des dadurch wesentlich unkomplizierteren und preisgünstigeren Arbeitsverlaufes . Dabei kommt der Biegearbeit zugute , daß sämtliche Knickstellen den gleichen Biegewinkel von annähernd 60$^\circ$ aufweisen , wie dies aus der schematischen Darstellung in Fig.4 besonders deutlich erkennbar ist .

Demgemäß ist ein nach diesem Verfahren hergestelltes Heizregister daran zu erkennen , daß es die Raumform eines spiralförmigen Vielecks aufweist , und daß es aus einem einstückigen Profilstrang ohne Schweißnähte an den Knickstellen hergestellt ist und durch einen Biegevorgang hergestellte Knickstellen an den Eckpunkten 5,5',5" aufweist .

Die Herstellung des erfindungsgemäßen Heizregisters in der beschriebenen Art und mit den unterschiedlichen Raumformen einer kontinuierlichen oder eckigen Spirale unter Verwendung von stranggepreßten Aluminiumprofilen hat schließlich den ganz besonderen Vorteil aufzuweisen , daß Leistungssprünge in einer Typenreihe von Heizungskesseln durch Parallelanordnung und Parallelschaltung mehrerer , jeweils durch einen Profilstrang gebildeter Heizregister-Moduln problemlos erstellbar sind .

Weil ein Heizkessel mit Heizregistern nach der Erfindung, deren Herstellung und Ausbildung eine gedrungene und leistungsstarke Konfiguration mit großen Wärmeaustauschflächen auf geringem umbautem Raum mit maximalem wärmewirtschaftlichem Effekt bei wesentlich reduziertem Material- und Arbeitsaufwand ergibt , und weil sich insbesondere die Herstellung der erfindungsgemäßen Raumformen nach den angegebenen Herstellungsverfahren für einen vollmechanisierten , größtenteils automatisierten Herstellungsprozess in jeweils gleicher Folge von Arbeitsschritten eignet ,kann somit von einer idealen Lösung der eingangs gestellten Aufgabe gesprochen werden .

0168637

- A 1 -

<u>P a t e n t a n s p r ü c h e</u>

1. Gasheizofen , insbesondere Kondensationsheizkessel , mit einem Brennraum mit wenigstens einem daran anschließenden Rauchzug und einem diesen als Heizregister umge - benden Mantel eines Wärmeabführmediums , die durch eine Wärmeaustauschwand voneinander getrennt sind , wobei die Wärmeaustauschwand in Form einer Spirale angeordnet ist und in direkter Verbindung zum Rauchgasabzug als Energiespender und/oder Energieträger angeordnet ist , d a d u r c h   g e k e n n z e i c h n e t , daß die zwei das Wärmeabführmedium zwischen sich führenden Wände (1,1') ein einstückiges , im wesentlichen spiralförmig verlaufendes Profil (2) bilden , das innen eine Anzahl von mit den Außenwänden (1,1') einstückigen längsverlaufenden Kanälen (3,3') und außen gleichgerichtete längsverlaufende Rippen (4,4') aufweist .

2. Gasheizofen nach Anspruch 1 , dadurch gekennzeich - net , daß das Profil aus stranggepreßtem Aluminium be - steht .

3. Gasheizofen nach Anspruch 1 und 2 , dadurch gekenn – zeichnet , daß das Profil (2) ein Strangpreßprofil aus Reinstaluminium ist .

4. Gasheizofen nach Anspruch 1 oder 2 oder 3 , dadurch gekennzeichnet , daß die Kanäle (3,3') kreisförmigen oder elliptoidischen Querschnitt aufweisen .

5. Gasheizofen nach einem der Ansprüche 1 bis 4 , dadurch gekennzeichnet , daß die Kanäle eine eckige , vorzugsweise hexagonale Querschnittsform , aufweisen .

6. Gasheizofen nach einem der Ansprüche 1 bis 5 , dadurch gekennzeichnet , daß die Rippen (4,4') als flache Stege ausgebildet sind , deren Querschnittsform rechteckig mit abgerundeten Kanten oder dreiecksförmig bzw. trapezförmig verjüngt ausgebildet ist .

7. Gasheizofen nach einem der Ansprüche 1 bis 6 , dadurch gekennzeichnet , daß die Rippen (4,4') quer verlaufende Schlitze beziehungsweise Kerben (17,17') aufweisen .

8. Gasheizofen nach einem der Ansprüche 1 bis 7 , dadurch gekennzeichnet , daß die Profilaußenwände (1,1') durch mit diesen einstückige Querwände (6,6') verbunden sind .

9. Gasheizofen nach einem der Ansprüche 1 bis 8 , dadurch gekennzeichnet , daß die Kanäle (3,3') den gesamten Innenraum des Profils (2) erfüllend und jeweils zu zweit nebeneinander eine gemeinsame Trennwand (10) bildend angeordnet sind .

1o. Gasheizofen nach einem der Ansprüche 1 bis 9 , dadurch gekennzeichnet , daß die Rippen (4,4') als sickenförmige, durch längslaufende Wandverformungen (13) aus- und/oder einspringende Erhöhungen und/oder Vertiefungen (11 bzw.12) in den Wänden (1,1') des stranggepreßten Aluprofils (2) ausgebildet sind .

11. Gasheizofen nach Anspruch 1o , dadurch gekennzeich - net , daß die Wanddicke (x,y) einer Wand (1,1') im Bereich einer Wandverformung (13) im wesentlichen unverändert und etwa gleich der Wanddicke (z) einer zwei Kanäle (3,3') trennenden Wand (10) ist .

12. Gasheizofen nach einem der Ansprüche 1 bis 11 , da - durch gekennzeichnet , daß eine Wandverformung (13) eckig wie dreieckig oder trapezförmig oder kurvig wie sinus - oder wellenförmig ausgebildet ist .

13. Gasheizofen nach einem der Ansprüche 1 bis 12 , da - durch gekennzeichnet , daß das Heizregister (100) von einer Anordnung jeweils gerader Strangpreßprofilabschnitte ,sogenannter Lamellen (30) , gebildet ist , deren Anordnung um die Brennkammer (7) herum die Grundform eines Vielecks aufweist , dessen Eckpunkte (5,5') im wesentlichen auf Kurvenästen (60,60;60") einer spiralförmigen Linie (70) liegend angeordnet sind .

14. Gasheizofen nach einem der Ansprüche 1 bis 13 , da - durch gekennzeichnet , daß die Anordnung der Lamellen (30) die Grundform eines Sechsecks aufweist , dessen in radialen Abständen (A,B,C) vom Pol (P) der spiralförmigen Linie (70) gelegenen Eckpunkte (5,5;5") im wesentlichen auf gleiche Polarwinkel ($\alpha_1$,$\alpha_2$,$\alpha_3$,$\alpha_4$,$\alpha_5$,$\alpha_6$) einschließen- den radialen Linien (8,8',8") gelegen sind .

15. Gasheizofen nach einem oder mehreren der Ansprüche 1 bis 14 , dadurch gekennzeichnet , daß zumindest die Rückwand (9) mit einer vom Wärmeabführmedium durchströmbaren Anordnung von Lamellen (30') ausgebildet ist , und daß die das Heizregister um die Brennkammer (7) bildenden Lamellen (30) und die in der Rückwand (9) angeordneten Lamellen (30') einen gemeinsamen Strang bildend in Reihe geschaltet sind .

16. Gasheizofen nach einem der Ansprüche 1 bis 15 , dadurch gekennzeichnet , daß das in Form einer Spirale beziehungsweise in Form eines spiralförmigen Vielecks ausgebildete Heizregister (100) mit vertikaler Achse (I-I) angeordnet bzw. ausgebildet und die Brennkammer (7) im oberen Bereich beziehungsweise der Brenner (20) im oberen Bereich der Brennkammer (7) angeordnet ist .

17. Verfahren zur Herstellung des Gasheizofens nach den Ansprüchen 1 bis 12 , dadurch gekennzeichnet , daß das aus den Wänden (1,1' sowie 6,6') den Kanälen (3,3') sowie den Rippen (4,4' ; 13,13') gebildete Profil (2,2') stranggepreßt und danach zur Spiralform gerundet wird .

18. Verfahren nach Anspruch 17 , dadurch gekennzeichnet , daß das Runden im Durchlauf durch Walzen (25) erfolgt , die einen Biegeradius festlegen , der während der Biegung zur Spiralform kontinuierlich vergrößert wird .

19. Verfahren nach Anspruch 17 und 18 , dadurch gekenn - zeichnet , daß die in den Rippen (4,4' ; 13,13') vorhandenen Schlitze beziehungsweise Kerben (17,17') durch Einschnitte beziehungsweise Einprägung mittels Prägewalzen (18,18') nach dem Strangpressen und vor beziehungsweise beim Runden hergestellt werden .

20. Verfahren zur Herstellung des die Grundform eines spiralförmigen Vielecks aufweisenden Heizregisters entsprechend den Ansprüchen 13 bis 16 , dadurch gekennzeichnet , daß diese in folgenden Arbeitsschritten vorgenommen wird , daß

a) als Ausgangsmaterial ein Profil aus stranggepreßtem Aluminium in einer Länge vorgerichtet wird , die der gestreckten Länge des Vielecks entspricht ;

b) an den Außenseiten dieses Profils die Abstände der Eck- bzw. -knickpunkte bzw. deren Position auf dem Ausgangsmaterial durch Anzeichnen etc. markiert werden ;

c) das Profilstück , welches im wesentlichen eine flache , doppelwandige einstückige Lamelle bildet , und an den Außenflächen vorzugsweise mit Rippen ausgebildet ist , an jeder Markierungsstelle , beginnend am brennkammerseitigen Ende , mit einem Einschnitt in einer zur Längsachse senkrechten Ebene bis auf die innere Wandung durchtrennt wird ;

d) an der Knickstelle - dem Trennschnitt entgegengesetzt - aus den Rippen der undurchtrennten Wandung V-förmige Gehrungsdreiecke herausgeschnitten werden;

e) dasProfil über die unversehrte Wandung in den Knick mit einem brennkammerseitigen stumpfen Winkel gebogen wird , wobei die durchtrennte Wandung zu einem V-förmigen Spalt aufklafft ;

f) in den V-förmigen Spalt ein kompatibel geformtes , ebenfalls V-förmiges Paßstück eingefügt und mediendicht verschweißt wird ;

g)    weiterfolgend alle übrigen Knickstellen gemäß f) fertiggestellt und das Heizregister einer Druck- und Dichtigkeitsprüfung unterzogen wird .

21. Verfahren nach dem Anspruch 20 , dadurch gekennzeichnet , daß die innere Wandung mit der entsprechenden Wandung eines danebenliegenden Profilstückes nicht einstückig ist , sondern durch eine von außen anbringbare Schweißnaht mit diesem verbunden ist .

22. Verfahren nach den Ansprüchen 20 und 21 , dadurch gekennzeichnet , daß die brennkammerseitige Wand der Profilstücke mit der danebenliegenden durch eine Schweißnaht verbunden und darauf die V-förmigen Gehrungsdrei - ecke eingeschweißt werden .

23 . Nach dem Verfahren gemäß den Ansprüchen 20 bis 22 hergestelltes Heizregister des Gasheizofens , dadurch gekennzeichnet , daß es die Raumform gemäß den Ansprü - chen 13 bis 15 aufweist , mit einander folgenden Knickstellen (14,14',14") an den Eckpunkten (5,5',5") , und daß jede dieser Knickstellen (14,14',14") im Strang - preßprofil einer Lamelle (30,30') mit einem Trennschnitt (15) durch die brennkammerabgewandte Wandung (16) der Lamelle (30,30') , mit einem Biegeknick (14) der brennkammerzugewandten Wandung (19) der Lamelle (30,30') zu einem stumpfen Winkel ($\delta$) und mit einem in den Knick - spalt (21) der durchtrennten Wandung (16) , vorzugsweise durch Schweißung eingefügten V-Profilstück (22) ausge - bildet ist .

24. Verfahren zur Herstellung des Heizregisters (100) nach den Ansprüchen 13 und 14 , dadurch gekennzeichnet , daß es aus einem unzertrennt einstückigen Strang des stranggepreßten Profils durch Biegen in den Knickstellen hergestellt ist .

25. Nach dem Verfahren gemäß Anspruch 24 hergestelltes Heizregister , dadurch gekennzeichnet , daß es in der Raumform gemäß den Ansprüchen 13 bzw. 14 aus einem einstückigen Profilstrang hergestellt ist und durch einen Biegevorgang hergestellte Knickstellen (14,14',14") an den Eckpunkten (5,5',5") aufweist .

# Fig.1

~7~

2

**Fig.2**

0168637

# Fig.3

3/4

0168637"

0168637

4/4

**Fig.4**

Fig.5

6/4

## Fig.7

24   22

100

~7~

20

## Fig.6

0168637

Fig.8

Fig. 9a

# Fig.9b

9/11

0168637

Fig.10a

Fig.10b

Fig.10c

Fig.10d

Fig. 11

0168637